# EUROPÄISCHE PATENTSCHRIFT

(11) **EP 1 062 131 B1**
(45) Veröffentlichungstag und Bekanntmachung des Hinweises auf die Patenterteilung: **24.10.2001**
(21) Anmeldenummer: 99911728.6
(22) Anmeldetag: 02.03.1999
(51) Int. Cl.: B60R 21/32

(54) **VERFAHREN ZUM BETRIEB EINER INSASSENSICHERHEITSEINRICHTUNG SOWIE ANSTEUEREINHEIT**
METHOD FOR OPERATING AN OCCUPANT SAFETY DEVICE, AND A CONTROL UNIT
PROCEDE POUR FAIRE FONCTIONNER UN DISPOSITIF DE SECURITE DESTINE AUX OCCUPANTS D'UNE VOITURE, ET UNITE DE COMMANDE

(30) Priorität: 07.03.1998 DE 19809927; 15.09.1998 DE 19842083
(43) Veröffentlichungstag der Anmeldung: 27.12.2000
(73) Patentinhaber: Conti Temic microelectronic GmbH, 90411 Nürnberg (DE)
(72) Erfinder: SKEDELJ, Jani DI, (DE); FENDT, Günter, D-86529 Schrobenhausen (DE); FLERLAGE, Jörg, D-86529 Schrobenhausen (DE); HERZ, Manfred, D-55130 Mainz (DE); MÜLLER, Norbert, D-86529 Schrobenhausen (DE); PETER, Wolfgang, D-86561 Aresing (DE); SPIES, Hans, D-85276 Pfaffenhofen (DE)
(74) Vertreter: Kolb, Georg
(86) Internationale Anmeldenummer: EP9901347
(87) Internationale Veröffentlichungsnummer: WO9944867

(56) Entgegenhaltungen:
- EP-A- 0 805 074
- EP-A- 0 813 998
- EP-A- 0 816 186
- US-A- 5 204 547
- US-A- 5 596 497
- US-A- 5 675 242

## Beschreibung

Die Erfindung betrifft ein Verfahren zum Betrieb einer Insassensicherheitseinrichtung gemäß dem Oberbegriff des Patentanspruches 1 sowie eine Ansteuereinheit, insbesondere zur Durchführung des Verfahrens gemäß Anspruch 4.

Ein derartiges Verfahren ist aus der DE 37 29 785 C1 bekannt. Wie aus der DE 37 29 785 C1 hervorgeht, soll die zugeführte Energie dadurch festgestellt werden, daß die am speicherelement anliegende Spannung gemessen, mit einem Sollwert verglichen und beim Unterschreiten dessen die Energiezufuhr unterbrochen wird. Dieses Verfahren kann gemäß Patentanspruch 5 sowie Spalte 5, Zeilen 34 bis 42 der DE 37 29 785 C1 dadurch ergänzt werden, daß gleichzeitig zur Spannung der durch das Auslösemittel fließende Strom erfaßt wird. Die Beschreibung der DE 37 29 785 C1 ist auf diese zwei Ausführungsbeispiele beschränkt, in denen in beiden Fällen die Spannung als zu messende Größe angeführt ist. Die Spannung des Speicherelement weist jedoch einen großen Nachteil bei der Ermittlung der zugeführten Energie auf, da dies vom Ladezustand des Speicherelements abhängig ist. Aus der DE-OS 37 38 862 der gleichen Anmelderin wie der DE 37 29 785 C1 wird zwar im Prinzip dieser Nachteil erkannt (vgl. Spalte 1, Zeilen 29 bis 40 der DE-OS 37 38 862), als Lösung jedoch nur eine zeitsteuerung betrachtet.

Ein weiterer Nachteil der DE 37 29 785 C1 ist, daß die Genauigkeit bei der Erfassung der dem Auslösemittel zugeführte Energie über die Spannung stark vom Leitungswiderstand abhängt. So mußte in der Praxis festgestellt werden, daß der Gesamtwiderstand aus dem eigentlichen Auslösemittel (2 Ohm) und der Leitung (schwankend von 0 bis hin zu 4 Ohm) stark von letzterer abhängt. Die real dem Auslösemittel zugeführte Energie kann somit wesentlich kleiner sein, als dies aus der Spannung am Speicherelement heraus bestimmbar ist.

Aus der DE 196 24 357 C1 ist eine Zündkreis-Endstufe zur Auslösung von Insassenschutzsystemen für Kfz bekannt, bei der neben einem ungeregelten Betrieb auch ein geregelter und begrenzter Ausgangsstrom-Betrieb zu entnehmen ist, bei dem die der Zündeinrichtung zugeführte zündenergie auf eine vorgegebene Energiemenge begrenzt wird. Dies erfolgt jedoch durch eine getaktete Stromsteuerung, bei der der Zündstrom zwischen einem ersten und einem zweiten Wert des Stromes gehalten wird, indem das bzw. die Schaltmittel entsprechend geöffnet und wieder geschlossen werden. im Zündstromkreis ist dabei eine Spule als Zwischenenergiespeicher erforderlich, um die zugeführte Zündenergie auch bei geöffneten Schaltmitteln an die Zündeinrichtung abzugeben. Diese Zündkreis-Endstufe ermöglicht somit nur über eine Strombegrenzung die beabsichtigte Begrenzung der zugeführten Energiemenge und erfordert neben einer Vielzahl zusätzlicher Bauelemente, insbesondere einer spule und eines Schmitt-Triggers für die getaktete Steuerung, auch eine zusätzliche zeitliche Begrenzung, da anderenfalls trotz des begrenzten Stromes über die Zeit dennoch eine unbegrenzte Energiemenge abfließen kann.

Aufgabe der Erfindung ist es, ein Verfahren zum Betrieb einer Sicherheitseinrichtung anzugeben, welches genau und unabhängig vom Leitungswiderstand ist. Außerdem soll eine geeignete Ansteuereinheit vorgestellt werden.

Diese Aufgabe wird durch die kennzeichnenden Merkmale der Hauptansprüche gelöst. Vorteilhafte Weiterbildungen der Erfindung sind aus den Unteransprüchen zu entnehmen.

Eine zum Strom durch das Auslösemittel proportionale Größe weist den entscheidenden Vorteil auf, daß sie im Zündstromkreis überall gleich und vom Leitungsbahnwiderstand unabhängig ist. Eine derartige zum Strom proportionale Größe kann schaltungstechnisch sehr einfach gewonnen werden und sowohl schaltungstechnisch als auch softwaretechnisch daraus durch Quadrierung und Integration eine der zugeführten energieproportionale Größe bestimmt werden, die mit einem Energiegrenzwert verglichen und beim Erreichen dessen die Energiezufuhr abgeschaltet wird.

Durch die Programmierung des Energiegrenzwertes kann im Gegensatz zu einer von vornherein festen Vorgabe eine Ansteuereinheit entweder unmittelbar vor dem Einbau in das Fahrzeug oder sogar noch während der Produktlebensdauer oder in Abhängigkeit vom aktuellen Betriebszustand des Fahrzeuges individuell angepaßt werden.

Außerdem kann neben einer geregelten Betriebsart auch eine ungeregelte vorgesehen werden, wodurch die Ansteuereinheiten sowohl für Fahrzeuge mit geregelter Energiezufuhr als auch für Fahrzeuge ohne diese eingesetzt werden können und zudem in besonderen Betriebszuständen eine Abschaltung der Energiebegrenzungsregelung möglich ist.

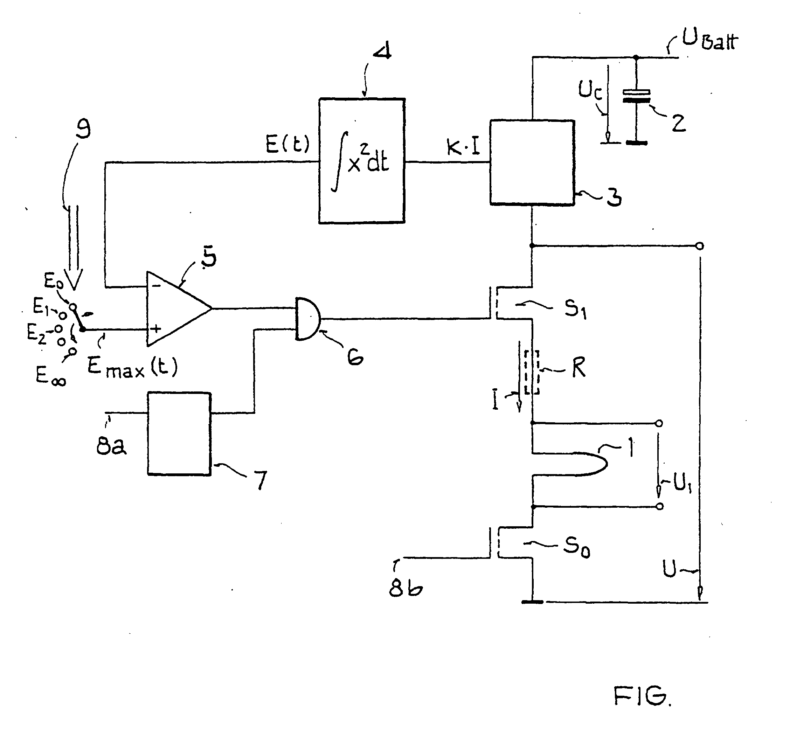

Die Erfindung soll nachfolgend anhand eines Ausführungsbeispieles und der Figur erläutert werden. Kurzbeschreibung der Figur:
- Figur: Ansteuereinheit zur Durchführung des Verfahrens mit einer Strommeßanordnung und einer Vorrichtung zur Quardrierung und Integration der proportionalen Größe.

Die einzige Figur zeigt in einem Blockschaltbild eine Ansteuereinheit für ein pyrotechnisches Auslösemittel 1. Das Auslösemittel 1 ist beispielsweise eine Zündpille eines Gasgenerators für einen Airbag oder Gurtstraffer. Im Auslösezündstromkreis ist über ein erstes Schaltmittel S₁ das Auslösemittel 1 mit dem Speicherelement 2 verbunden, welches von einer Energieversorgungsspannung U_{Batt} aufgeladen wird. Das Auslösemittel 1 ist mit seinem zweiten Anschluß über ein zusätzliches Low Side Schaltmittel S₀ mit Masse verbunden. Das Low Side Schaltmittel S₀ ermöglicht eine zusätzliche Absicherung der Ansteuereinheit, ist jedoch nicht zwingend erforderlich.

Außerdem ist im Auslösezündstromkreis eine Strommeßanordnung 3 vorgesehen, die eine proportionale Größe k^{.}I des durch das Auslösemittel 1 fließenden Stromes I bestimmt. Diese Strommeßanordnung 3 kann beispielsweise als ein Stromspiegel ausgeführt sein, wobei der Proportionalitätsfaktor k neben einem Wert von 1 für eine direkte Identität vorzugsweise deutlich kleiner, beispielsweise ein Hundertstel ist. Dies erweist sich als vorteilhaft, da durch das Auslösemittel 1 ein recht erheblicher Strom I während der Auslösung fließt und für eine schaltungstechnische Umsetzung der mit der Strommeßanordnung verbundenen Vorrichtung 4 zur Quadrierung und Integration der proportionalen Größe k^{.}I die erforderlichen Bauelemente, insbesondere ein zur Integration dienender nicht näher dargestellter Kondensator deutlich kleiner ausgelegt werden können. Derartige schaltungstechnische Ausbildungen der Vorrichtung 4 sind dem Stand der Technik bekannt.

Neben einer schaltungstechnischen Ausbildung ist selbstverständlich eine softwaretechnische denkbar indem die zum Strom I proportionale Größe k^{.}I ad gewandelt wird und numerisch weiterverarbeitet wird.

Im Blockschaltbild der Figur wird der Integralwert E(t) am Ausgang der Vorrichtung 4 nun einem Komparator 5 zugeführt der den Integralwert E(t) mit einem vorgegebenen Energiegrenzwert Eₘₐₓ(t) vergleicht und, falls der Integralwert E(t) den Energiegrenzwert Eₘₐₓ erreicht den Komparatorausgang auf Low setzt. Selbstverständlich ist der Energiegrenzwert Eₘₐₓ entsprechend auf dem Proportionalitätsfaktor k der proportionalen Größe k^{.}I angepaßt. Die Auslösung einer derartigen Ansteuereinheit erfolgt über die Ansteuersignale 8a und 8b, wobei das Signal 8b direkt dem Low side Schaltmittel S₀ und das Signal 8a zunächst einer zeitsteuerung 7 zugeführt wird. Am Ausgang der Zeitsteuerung 7 wird auf den High-Impuls am Signal 8a auch ausgangsseitig ein High-Impuls gesetzt. Da der Komparator 5 bis zum Erreichen des Energiegrenzwertes Eₘₐₓ(t) durch den Integralwert E(t) am Ausgang einen High-Pegel führt, wird das Logikglied 6 auf einen High-Pegel am Ausgang der zeitsteuerung 7 hin auch ausgangsseitig ein High-Pegel an das schaltmittel S₁ setzen. Durch die High-Pegel an den Schaltmitteln S₀ und S₁ ist der Auslösezündstromkreis geschlossen und die im Speicherelement 2 gespeicherte Energie wird über den Strom I dem Auslösemittel 1 zugeführt. Parallel zur bereits beschriebenen Bestimmung der Energie erfaßt die zeitsteuerung 7 die Zeitdauer des Stromflusses und wird beim Erreichen einer vorgegebenen Höchstdauer die Energiezufuhr unabhängig vom Erreichen des Energiegrenzwertes Eₘₐₓ(t) unterbrechen, indem es ausgangsseitig vom High-Pegel auf den Low-Pegel wechselt. Da das Logikglied 6 eine Und-Verknüpfung der Ausgangssignale der Zeitsteuerung 7 und des Komparators 8 realisiert, ist es unabhängig, welches Signal zuerst seinen schwellwert erreicht.

Betrachtet man im Vergleich zu dem oben beschriebenen Verfahren die Spannung U_{C} über dem Speicherelement 2 bzw. die diesem analoge Spannung U über die Schaltmittel S₁ und S₀ sowie das Auslösemittel 1 hinweg, so wird deutlich, daß diese Spannungen zur Bestimmung der real dem Auslösemittel zugeführten Energie äußerst ungeeignet sind, da diese Spannungen U bzw. U_{C} bei einem relativ hohen Leitungswiderstand angedeutet als R, recht erheblich von der real am Auslösemittel 1 abfallenden Spannung U₁ unterscheiden. Nur durch das erfindungsgemäße Verfahren zum Betrieb einer Insassenschutzeinrichtung auf Basis des durch das Auslösemittel 1 fließenden Stromes I kann die dem Auslösemittel 1 zugeführte Energie zuverlässig bestimmt und die Ansteuerung sicher und erfolgreich durchgeführt werden.

Der Energiegrenzwert Eₘₐₓ(t) wird bevorzugt durch Programmierung eingestellt. Dies kann unmittelbar vor dem Einbau der Ansteuereinheit in das Fahrzeug erfolgen, wodurch identische Ansteuereinheiten auf einzelne Fahrzeugtypen individuell angepaßt werden können. Denkbar ist auch, diesen Energiegrenzwert während der Produktlebensdauer oder sogar unmittelbar vor dem Auslösen in Abhängigkeit von bestimmten Betriebszuständen, bspw. der am speicherelement derzeit verfügbaren Spannung und der Anzahl der Auslösemittel anzupassen. In der Figur wurde diese Programmierung sinnbildlich durch einen Schalter 9 realisiert, der einen der Energiegrenzwerte E0, E1, E2 oder E∝ an den Komparator 5 schaltet. selbstverständlich kann anstelle eines Schalters 9 äquivalent dazu auch eine n-Bit-codierung des Energiegrenzwertes digital realisiert werden.

Der zustand E0 kann beispielsweise für die Deaktivierung der Auslösung stehen, E1 und E2 in Abhängigkeit von der Ausstattungsvariante gewählt werden und durch E∝ die ungeregelte Betriebsart durch einen "unendlich" großen Energiegrenzwert eingestellt werden. Die Umschaltung in die ungeregelte Betriebsart ist selbstverständlich auch anders möglich, beispielsweise durch eine zweite, energiezufuhr- und energiemessungsunabhängige Ansteuerung vom Gate des Schaltmittels S1.

## Patentansprüche

1. Verfahren zum Betrieb einer Insassensicherheitseinrichtung, insbesondere für Kraftfahrzeuge, mit einem Speicherelement (2) für elektrische Energie sowie mindestens einem mit dem Speicherelement (2) verbindbaren Auslösemittel (1) für Rückhaltevorrichtungen, wie Airbags oder Gurtstraffer, wobei während dem Betätigen jedes Auslösemittels (1) die dem Auslösemittel (1) zugeführte Energie gemessen wird und nach Erreichen eines festlegbaren Energiegrenzwertes die Energiezufuhr zu dem zuvor betätigten Auslösemittel unterbrochen wird, **dadurch gekennzeichnet, daß** eine dem Quadrat des durch das Auslösemittel (1) fließenden Stromes proportionale Größe zu einem Integralwert (E(t)) integriert und mit dem Energiegrenzwert (Eₘₐₓ) verglichen wird.

2. Verfahren nach Anspruch 1, **dadurch gekennzeichnet, daß** zusätzlich zur Bestimmung der Energie auch die Zeitdauer des Stromflusses bestimmt wird, und falls diese Zeitdauer eine vorgegebene Höchstdauer übersteigt, die Energiezufuhr unabhängig vom Erreichen des Energiegrenzwertes unterbricht.

3. Verfahren nach einem der vorangehenden Ansprüche 1 oder 2, **dadurch gekennzeichnet, daß** der Energiegrenzwert individuell angepaßt wird.

4. Verfahren zum Betrieb einer Insassensicherheitseinrichtung, insbesondere für Kraftfahrzeuge, mit einem Speicherelement (2) für elektrische Energie sowie mindestens einem mit dem Speicherelement (2) verbindbaren Auslösemittel (1), für Rückhaltevorrichtungen, wie Airbags oder Gurtstraffer, wobei während dem Betätigen jedes Auslösemittels (1) die dem Auslösemittel (1) zugeführte Energie gemessen wird und nach Erreichen eines festlegbaren Energiegrenzwertes die Energiezufuhr zu dem zuvor betätigten Auslösemittel unterbrochen wird, insbesondere zur Durchführung des Verfahrens nach einem der vorangehenden Ansprüche 1 oder 2, **dadurch gekennzeichnet, daß**
a) eine geregelte Betriebsart vorgesehen ist, bei der nach dem Betätigen jedes Auslösemittels (1) die diesem Auslösemittel (1) zugeführte Energie gemessen und nach Erreichen eines festlegbaren Energiegrenzwertes die Energiezufuhr zu dem betätigten Auslösemittel unterbrochen wird,
b) eine ungeregelte Betriebsart vorgesehen ist, bei der das Auslösemittel ungeregelt aus dem Speicherelement oder direkt aus einem Bordnetz gespeist wird, und
c) zwischen diesen Betriebsarten durch Programmierung einer Ansteuereinheit gewählt werden kann.

5. Ansteuereinheit für ein pyrotechnisches Auslösemittel (1) zum Betrieb einer Insassensicherheitseinrichtung, insbesondere für Kraftfahrzeuge, mit einem speicherelement (2) für elektrische Energie sowie mindestens einem mit dem Speicherelement (2) verbindbaren Auslösemittel (1) für Rückhaltevorrichtungen, wie Airbags oder Gurtstraffer, wobei während dem Betätigen jedes Auslösemittels (1) die dem Auslösemittel (1) zugeführte Energie gemessen wird und nach Erreichen eines festlegbaren Energiegrenzwertes die Energiezufuhr zu dem zuvor betätigten Auslösemittel unterbrochen wird, insbesondere zur Durchführung des Verfahrens nach einem der vorangehenden Ansprüche, **gekennzeichnet durch folgende Merkmale**:
- eine Strommeßanordnung (3) zur Bestimmung einer proportionalen Größe (k^{.}I) des **durch** das Auslösemittel fließenden Stroms (I), verbunden mit dieser
- eine Vorrichtung (4) zur Quadrierung und Integration der proportionalen Größe zu einem Integralwert (E(t)) vorgesehen ist sowie
- ein Komparator (5), der den Integralwert (E(t)) mit einem vorgegebenen Energiegrenzwert (Eₘₐₓ)) vergleicht und, falls der Integralwert (E(t)) den Energiegrenzwert (Eₘₐₓ) erreicht, die Energiezufuhr unterbricht.

6. Ansteuereinheit nach Anspruch 5, **dadurch gekennzeichnet, daß** der Energiegrenzwert durch Programmierung anpaßbar ist.

## Claims

1. A method of operating an occupant safety device, especially for motor vehicles, incorporating a storage element (2) for electrical energy and at least one triggering means (1) for retention devices such as airbags or seat belt tensioners that is connectable to the storage element (2), whereby, during the actuation of each triggering means (1), the energy supplied to the triggering means (1) is measured and the supply of energy to the previously actuated triggering means is interrupted when a predeterminable limiting energy value is reached, **characterised in that** a variable proportional to the square of the current flowing through the triggering means (1) is integrated to an integral value (E(t)) and compared with the limiting energy value (Eₘₐₓ).

2. A method in accordance with Claim 1, **characterised in that**, in addition to determining the amount of energy, the duration of the current flow is also determined and, in the event that this duration exceeds a predetermined maximum period, the supply of energy is interrupted independently of whether the limiting energy value is reached.

3. A method in accordance with either of the preceding Claims 1 or 2, **characterised in that** the limiting energy value is set on an individual basis.

4. A method of operating an occupant safety device, especially for motor vehicles, incorporating a storage element (2) for electrical energy and at least one triggering means (1) for retention devices such as airbags or seat belt tensioners that is connectable to the storage element (2), whereby, during the actuation of each triggering means (1), the energy supplied to the triggering means (1) is measured and the supply of energy to the previously actuated triggering means is interrupted when a predeterminable limiting energy value is reached, in particular, for carrying out the method in accordance with either of the preceding Claims 1 or 2, **characterised in that**
a) there is provided a regulated operational mode in which, after the actuation of each triggering means (1), the energy supplied to this triggering means (1) is measured and the supply of energy to the actuated triggering means is interrupted when a predetermined limiting energy value is reached,
b) there is provided an unregulated operational mode in which the triggering means is fed in unregulated manner by the storage element or directly by the vehicle power system, and
c) selecting between these two operational modes can be effected by programming a control unit.

5. A control unit for a pyrotechnic triggering means (1) for operating an occupant safety device, especially for motor vehicles, incorporating a storage element (2) for electrical energy and at least one triggering means (1) for retention devices such as airbags or seat belt tensioners that is connectable to the storage element (2), whereby, during the actuation of each triggering means (1), the energy supplied to the triggering means (1) is measured and the supply of energy to the previously actuated triggering means is interrupted when a predeterminable limiting energy value is reached, in particular, for carrying out the method in accordance with any of the preceding Claims, **characterised by** the following features:
- a current measuring arrangement (3) for determining a proportional variable (k I) of the current (I) flowing through the triggering means, connected thereto
- there is provided a device (4) for squaring and integrating the proportional variable to an integral value (E(t)) and
- a comparator (5) which compares the integral value (E(t)) with a predetermined limiting energy value (Eₘₐₓ) and, in the event that the integral value (E(t)) reaches the predetermined limiting energy value (Eₘₐₓ), interrupts the supply of energy.

6. A control unit in accordance with Claim 5, **characterised in that** the limiting energy value is adjustable by a programming process.

## Revendications

1. Procédé pour faire fonctionner un dispositif de sécurité pour passagers, notamment pour véhicules automobiles, comportant un élément de stockage (2) pour une énergie électrique ainsi qu'au moins un moyen de déclenchement (1), pouvant être relié à l'élément de stockage (2), pour des dispositifs de retenue, tels que des airbags ou des tendeurs de ceintures, selon lequel pendant l'actionnement de chaque moyen de déclenchement (1), l'énergie envoyée au moyen de déclenchement (1) est mesurée et, lorsqu'une valeur limite pouvant être fixée de l'énergie est atteinte, l'envoi d'énergie au moyen de déclenchement actionné auparavant est interrompu, **caractérisé en ce qu'**une grandeur, proportionnelle au carré du courant circulant dans le moyen de déclenchement (1), est intégrée pour former une valeur intégrale (E(t)) et est comparée à la valeur limite d'énergie (Eₘₐₓ).

2. Procédé selon la revendication 1, **caractérisé en ce qu'**en plus de la détermination de l'énergie, on détermine également la durée du flux de courant et, dans le cas où cette durée dépasse une valeur maximale prédéterminée, l'envoi d'énergie est interrompu indépendamment du fait que la valeur limite d'énergie soit atteinte ou non.

3. Procédé selon l'une des revendications précédentes 1 ou 2, **caractérisé en ce que** la valeur limite d'énergie est adaptée à chaque cas.

4. Procédé pour faire fonctionner un dispositif de sécurité pour passagers, notamment pour véhicules automobiles, comportant un élément de stockage (2) pour une énergie électrique ainsi qu'au moins un moyen de déclenchement (1), pouvant être relié à l'élément de stockage (2), pour des dispositifs de retenue, tels que des airbags ou des tendeurs de ceintures, selon lequel pendant l'actionnement de chaque moyen de déclenchement (1), l'énergie envoyée au moyen de déclenchement (1) est mesurée et, lorsqu'une valeur limite pouvant être fixée de l'énergie est atteinte, l'envoi d'énergie au moyen de déclenchement actionné auparavant est interrompu, notamment pour la mise en oeuvre du procédé selon l'une des revendications précédentes 1 ou 2, **caractérisé en ce que**
a) il est prévu un type de fonctionnement réglé, lors duquel, après l'actionnement de chaque moyen de déclenchement (1), l'énergie envoyée à ce moyen de déclenchement (1) est mesurée et une fois qu'une valeur limite d'énergie pouvant être fixée est atteinte, l'envoi d'énergie au moyen de déclenchement actionné est interrompu,
b) il est prévu un type de fonctionnement non réglé, lors duquel le moyen de déclenchement est alimenté d'une manière non réglée à partir de l'élément de blocage ou directement à partir du réseau de bord, et
c) un choix entre ces types de fonctionnement peut être effectué par programmation de l'unité de commande.

5. Unité de commande pour un moyen de déclenchement pyrotechnique (1) pour faire fonctionner un dispositif de sécurité pour passagers, notamment pour véhicules automobiles, comportant un élément de stockage (2) pour une énergie électrique ainsi qu'au moins un moyen de déclenchement (1), pouvant être relié à l'élément de stockage (2), pour des dispositifs de retenue, tels que des airbags ou des tendeurs de ceintures, selon lequel pendant l'actionnement de chaque moyen de déclenchement (1), l'énergie envoyée au moyen de déclenchement (1) est mesurée et, lorsqu'une valeur limite pouvant être fixée de l'énergie est atteinte, l'envoi d'énergie au moyen de déclenchement actionné auparavant est interrompu, notamment pour la mise en oeuvre du procédé selon l'une des revendications précédentes, **caractérisée par** les caractéristiques suivantes:
- un dispositif (3) de mesure du courant pour déterminer une grandeur proportionnelle (k.I) du courant I circulant dans le moyen de déclenchement, et en association avec ce dispositif,
- il est prévu un dispositif (4) pour élever au carré et intégrer la grandeur proportionnelle pour former une valeur intégrale (E(t)) et
- un comparateur (5) qui compare la valeur intégrale (E(e) à une valeur limite d'énergie prédéterminée (Eₘₐₓ) et, dans le cas où la valeur intégrale (E(t)) atteint la valeur limite d'énergie (Eₘₐₓ), interrompt l'envoi d'énergie.

6. Unité de commande selon la revendication 5, **caractérisée en ce que** la valeur limite d'énergie peut être adaptée par programmation.
